(19) Europäisches Patentamt
European Patent Office
Office européen des brevets

(11) Veröffentlichungsnummer: **0 332 013 A2**

(12) # EUROPÄISCHE PATENTANMELDUNG

(21) Anmeldenummer: **89103445.6**

(51) Int. Cl.⁴: **C09D 5/02 , C09D 7/12**

(22) Anmeldetag: **28.02.89**

(30) Priorität: **05.03.88 DE 3807234**

(43) Veröffentlichungstag der Anmeldung:
**13.09.89 Patentblatt 89/37**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Dersch, Rolf, Dr.**
**Albrecht-Dürer-Ring 16**
**D-6710 Frankenthal(DE)**
Erfinder: **Wistuba, Eckehardt, Dr.**
**Im Obergarten 7**
**D-6702 Bad Dürkheim(DE)**
Erfinder: **Goertz, Hans-Helmut, Dr.**
**Am Wurmberg 11**
**D-6713 Freinsheim(DE)**
Erfinder: **Fischer, Gerhard**
**Am Herrgottsacker 11**
**D-6716 Dirmstein(DE)**
Erfinder: **Haardt, Axel**
**Holzstrasse 12**
**D-6806 Viernheim(DE)**
Erfinder: **Neubert, Gerhard, Dr.**
**Panoramastrasse 11**
**D-6719 Battenberg(DE)**

(54) **Herstellen von Anstrichen mittels wässriger Anstrichstoffe.**

(57) Herstellen von Anstrichen mittels wäßriger Anstrichstoffe auf Basis einer Polymerdispersion und üblicher Zusatzstoffe mit einer Verbindung der allgemeinen Formel I als Verdicker

$$R[-(A)_x-(CH_2-\underset{|}{\overset{R^1}{C}}H-O)_y-H]_n \qquad I,$$

wobei
R = über Sauerstoff gebundener Rest eines 2 bis 6-wertigen Alkohols mit 2 bis 10 C-Atomen,
R¹ = Alkyl-, Alkoxymethyl- oder Alkenyloxymethyl-Rest oder eine Mischung dieser Reste, mit jeweils 6 bis 30 C-Atomen im Alkyl-, Alkoxy- bzw. Alkenyloxy-Rest,
A = $-CH_2CH_2-O-$ allein oder in Mischung mit
$-CH_2-CH(CH_3)-O-$

$-CH_2-CH(C_2H_5)-O-$

$-CH(CH_3)-CH(CH_3)-O-$ oder
$-CH_2CH_2CH_2CH_2-O-$, wobei A zu mindestens 50 Mol% $-CH_2CH_2O-$ bedeutet,
x = 12 bis 500,

EP 0 332 013 A2

$y$ = ein Durchschnittswert von 0,3 bis 5,
$n$ = eine ganze Zahl von 2 bis 6.

## Herstellen von Anstrichen mittels wäßriger Anstrichstoffe

Die Erfindung betrifft das Arbeiten mit wäßrigen Anstrichstoffe mit hoher Lagerbeständigkeit und guten Fließeigenschaften, die zu Anstrichen von hohem Glanz und hoher Wasser- und Korrosionsfestigkeit auftrocknen.

Anstrichstoffe mit wäßrigen Polymerdispersionen als Bindemittel zeigen im allgemeinen plastisches Fließverhalten. Dies ist bei Applikation auf mineralische Untergründe - Beispiele sind Fassaden- und Innenfarben -durchaus erwünscht. Bei der Beschichtung von Holz oder Metall wird dagegen häufig eine glatte, störungsfreie Oberfläche angestrebt, bei der Unregelmäßigkeiten, bedingt durch das Auftragsgerät oder feine Unebenheiten des Untergrunds, nicht mehr zu erkennen sind. Bei plastischem Fließverhalten lassen sich diese Anforderungen nicht erfüllen: Als Folge des geringen Streichwiderstandes sind derartige Anstrichstoffe mit dem Pinsel schlecht zu verteilen und verlaufen auch kaum während der Trocknung. Übliche Verdickungsmittel, beispielsweise Cellulosederivate wie Hydroxyethyl- oder Carboxymethylcellulose oder Polyacrylsäuresalze, verstärken dieses Fließverhalten noch.

Celluloseether werden darüber hinaus von Mikroorganismen abgebaut, was die Lagerstabilität der Anstrichstoffe beeinträchtigt.

Für Korrosionsschutzanstriche kommt überdies die Forderung hinzu, daß sie eine hohe Wasserquellfestigkeit besitzen müssen. Verdicker für wäßrige Dispersionen sind naturnotwendig hydrophil und beeinträchtigen dadurch die Wasserfestigkeit des Anstrichs. Daraus ergibt sich die Forderung, daß der Gehalt an Verdicker möglichst gering ist, und dies wiederum bedingt eine möglichst hohe Wirksamkeit des Verdikkers. Eine hohe Wirksamkeit ist bei den bisher bekannten Verdickern stets mit einem schlechten Verlauf verknüpft. Schlechter Verlauf ist aber nicht nur optisch nachteilig, sondern führt auch zu schlechtem Korrosionsschutz infolge Poren- und Blasenbildung.

Die Beeinträchtigung der Wasserfestigkeit des Anstrichs infolge schlechten Verlaufs tritt besonders deutlich hervor, wenn eine Polymerdispersion verwendet wird, die an sich eine hohe Wasserquellfestigkeit besitzt, wie sie beispielsweise in den EP-A-91021 und 225 612 beschrieben sind.

Der Erfindung lag die Aufgabe zugrunde, wäßrige Anstrichstoffe mit verbesserten Fließeigenschaften, hoher Lagerbeständigkeit, gutem Verlauf, hohem Glanz und gleichzeitig hoher Wasserfestigkeit und Korrosionsschutzwirkung zu entwickeln.

Gegenstand der Erfindung sind wäßrige Anstrichstoffe auf Basis von Polymerdispersionen mit gegebenenfalls Pigmenten, Füllstoffen und üblichen Additiven wie Dispergier-, Netz-, Filmbindehilfsmitteln, Entschäumern, die dadurch gekennzeichnet sind, daß sie als Verdickungsmittel Polyetherpolyole der Formel I enthalten

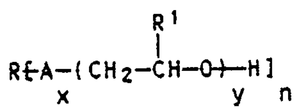

I,

wobei

R = über Sauerstoff gebundener Rest eines 2 bis 6-wertigen Alkohols mit 2 bis 10 C-Atomen,

$R^1$ = Alkyl-, Alkoxymethyl- oder Alkenyloxymethyl-Rest oder eine Mischung dieser Reste, mit jeweils 6 bis 30, vorzugsweise 6 bis 18 C-Atomen im Alkyl-, Alkoxy- bzw. Alkenyloxy-Rest, A = $-CH_2CH_2-O-$ allein oder in Mischung mit

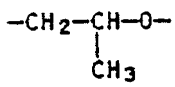 (=EO) allein oder in Mischung mit

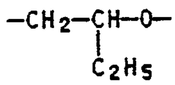 (= PO)

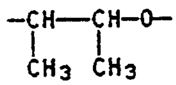 oder

$-CH_2CH_2CH_2CH_2-O-$,

wobei A zu mindestens 50, vorzugsweise mindestens 70 Mol% $-CH_2CH_2O-$ bedeutet,
x = 12 bis 500,
y = ein Durchschnittswert (gemittelt über zahlreiche Moleküle) von 0,3 bis 5
n = eine ganze Zahl von 2 bis 6.

Derartige Verbindungen wurden bereits als Verdicker für hydraulische Flüssigkeiten auf wäßriger Basis (US 4 411 819, 4 649 224, 4 665 239, WO 84/00361) sowie für wäßrige Quenchflüssigkeiten (US 4 381 205) zum Abschrecken heißer Metalle vorgeschlagen. Ihre hervorragende Eignung als Verdicker für Anstrichstoffe war dadurch jedoch nicht nahegelegt.

Die erfindungsgemäß eingesetzten Verdicker sind Polyetherpolyole, die aus einem linearen oder verzweigten Niedrigalkylenoxid-Homo- oder -Copolymeren bestehen, das endständig mit 1,2-Alkylenoxiden mit 8 bis 32 Kohlenstoffatomen oder Alkyl- bzw. Alkenylglycidylethern mit 6 bis 30 Kohlenstoffatomen in der Alkyl- bzw. Alkenylkette umgesetzt ist. Das mittlere Molekulargewicht liegt im Bereich von 1 000 bis 75 000.

Solche Polyetherpolyole werden erhalten, indem man, wie in EP 61 822 und EP 116 564 beschrieben, einen mehrwertigen Alkohol mit 2 bis 10 Kohlenstoffatomen, mit Ethylenoxid alleine oder mit Ethylenoxid und einem oder mehreren Alkylenoxiden mit 3 oder 4 Kohlenstoffatomen umsetzt (wobei im letzteren Fall die Umsetzung im Gemisch erfolgt, wenn ein statistisches Copolymeres gewünscht ist, und sukzessiv erfolgt, wenn ein Blockcopolymeres gewünscht ist) und anschließend diese Zwischenstufe mit mindestens 0,3 Äquivalent (pro Hydroxylgruppe) Alkylenoxid mit 8 bis 32 Kohlenstoffatomen und endständiger Epoxidgruppe oder mit mindestens 0,3 Äquivalent Alkyl- oder Alkenylglycidylether mit 6 bis 30 Kohlenstoffatomen im Alkyl bzw. Alkenylrest umsetzt. Die Herstellung kann auch, wie in US 4 398 045 beschrieben, durch Umsetzung eines bereits vorliegenden Polyalkylenoxidhomo- oder copolymeren, das aus $C_2$- bzw. $C_2$ und $C_3$ $C_4$-Epoxiden aufgebaut ist, mit den o.g. längerkettigen Alkylenoxiden bzw. Glycidylethern erfolgen.

Mit 2 bis 6-wertigen Alkoholen sind solche gemeint, die 2 bis 6 Hydroxylgruppen besitzen. Es handelt sich im einzelnen um Alkanpolyole, Alkenpolyole, Alkinpolyole oder Oligooxyalkylenglykole, jeweils mit 2 bis 10, vorzugsweise 2 bis 6 Kohlenstoffatomen.

Beispiele für geeignete Alkanpolyole sind Ethylenglykol, 1,2- und 1,3-Propylenglykol, Neopentylglykol, 1,2-Butandiol, 1,3-Butandiol, 1,4-Butandiol, Trimethylolpropan, Glycerin, Pentaerythrit, 2,3,4,5-Hexantetrol, Sorbit, Glucose.

Beispiele für Alkenpolyole sind 2-Buten-1,4-diol, 2-Hexen-1,4,6-triol, 1,5-Hexadien-3,4-diol, 3-Hepten-1,2,6,7-tetrol.

Beispiele für Alkinpolyole sind 2-Butin-1,4-diol, 2-Hexin-1,4,6-triol, 4-Octin-1,2,7,8-tetrol.

Beispiele für Oligooxyalkylenglykole sind Diethylenglykol, Triethylenglykol, Tetraethylenglykol, Dipropylenglykol.

Das Grundgerüst des Polyetherpolyols kann entweder nur aus Oxyethyleneinheiten aufgebaut sein oder daneben auch Oxyalkyleneinheiten mit 3 bis 4 Kohlenstoffatomen in einer Menge bis zu 50, vorzugsweise bis zu 30 Mol% enthalten. Entsprechende Alkylenoxide sind insbesondere Propylenoxid, aber auch 1,2-Butylenoxid, 2,3-Butylenoxid, ferner auch Tetrahydrofuran. Die entsprechenden Copolymeren können statistische oder Blockcopolymere sein. Unter den Copolymeren besonders bevorzugt sind solche, die Ethylenoxid und Propylenoxid im Gewichtsverhältnis 70:30 bis 95:5 enthalten.

Die Herstellung der am Kettende eingebauten längerkettigen Epoxide bzw. Glycidylether mit 8 bis 32 bzw. 6 bis 30 Kohlenstoffatomen erfolgt in üblicher Weise durch α-Olefinoxidation bzw. durch Umsetzung von Fettalkoholen mit Epichlorhydrin (vgl. z.B. US 4 086 279).

Die Menge an längerkettigem 1,2-Alkylenoxid bzw. Glycidylether liegt im allgemeinen zwischen 0,5 und 75 Gew.%, bezogen auf das Gesamtmolekül. Das durchschnittliche molare Verhältnis von längerkettigem Epoxid bzw. Glycidylether zu jeder einzelnen Hydroxygruppe des mehrfunktionellen Alkohols soll im Bereich von 0,3 bis 5, vorzugsweise zwischen 0,5 und 2 liegen.

Beispiele für langkettige 1,2-Epoxide sind 1,2-Epoxyoctan, 1,2-Epoxydodecan, 1,2-Epoxyhexadecan, 1,2-Epoxyoctadecan, 1,2-Epoxytetracosan, 1,2-Epoxyhexacosan, 1,2-Epoxyoctacosan wie auch Mischungen solcher Epoxide, die käuflich erhältlich sind.

Beispiele für Alkylglycidylether sind Octyl-, Dodecyl-, 2-Methyldodecyl-, Tetradecyl-, Hexadecyl-, 2-Hexyldecyl-, Octadecyl-, 2-Hexyldodecyl-, Eicosyl-, 2-Octyldodecyl-, Tetracosyl- und Cerylglycidylether.

Beispiele für Alkenylglycidylether sind Oleylglycidylether oder Phytylglycidylether.

Als Verdickungsmittel werden Polyetherpolyole bevorzugt, die man durch Umsetzung eines bi- oder trifunktionellen Alkohols mit Ethylenoxid, ggf. im Gemisch mit bis zu 30 Gew.% Propylenoxid, und anschließende weitere Umsetzung mit mindestens einem 1,2-Alkylenoxid mit 8 bis 18 Kohlenstoffatomen oder mindestens einem Alkyl- oder Alkenylglycidylether mit 8 bis 18 Kohlenstoffatomen in der Alkyl- bzw. Alkylengruppe in einer Menge von 2 bis 5 Mol pro Mol bi- oder trifunktioneller Alkohol erhält.

Bindemittel der erfindungsgemäßen Anstrichstoffe sind wäßrige Polymerdispersionen, die aus $\alpha,\beta$-olefinisch ungesättigten Monomeren nach dem Verfahren der Emulsionspolymerisation oder, für den Korrosionsschutz bevorzugt, durch Sekundärdispersion, insbesondere gemäß EP-A-91021 oder 225 612, erhalten werden. Die Polymerisatzusammensetzung kann in weiten Grenzen variieren, es lassen sich jedoch im wesentlichen drei Klassen unterscheiden: (Meth)Acrylesterhomo- und Copolymerisate, Styrol-(meth)-acrylat-Copolymerisate sowie Vinylestercopolymerisate, jeweils gegebenenfalls mit carboxylgruppenhaltigen Comonomeren.

Der nichtflüchtige Anteil der bei der Zubereitung der Anstrichstoffe eingesetzten Polymerdispersionen beträgt 30 bis 70, vorzugsweise 40 bis 65 Gew.%.

Die erfindungsgemäßen Anstrichstoffe (bestehend aus Polymerdispersion und allen Zusatzstoffen) besitzen Feststoffgehalte von 30 bis 80, vorzugsweise 40 bis 65 Gew.%. Die Pigmentvolumenkonzentration hängt von der Formulierung ab: bei Seidenglanzfarben liegt sie bei 30 bis 45, bei Glanzfarben bei 15 bis 20 %, bei Korrosionsschutz-Anstrichstoffen bei 15 bis 40 %. Als Pigment kommt Titandioxid, insbesondere Rutil, in Frage. Darüber hinaus können Buntpigmente, wie Eisenoxide, Chromoxid oder Spezialpigmente zum Schutz vor Korrosion, wie Zinkphosphat, Kalziumferrit, oder vor UV-Strahlung eingesetzt werden.

Beispiele für Füllstoffe sind Kaolin, Kalziumcarbonat, Talkum, Kalzium- oder Magnesiumsilikate, Quarzmehl, Schwerspat.

Dazu kommen als übliche Zusatzstoffe z.B. Entschäumer, Konservierungsmittel, Filmbildehilfsmittel, gegebenenfalls Weichmacher, sowie Mattierungs- und Antiblockmittel, ferner gegebenenfalls Ammoniak zur Einstellung des pH-Wertes.

Um die Pigment-Füllstoffe im feindispergierten Zustand zu halten, sind grenzflächenaktive Stoffe erforderlich. Hierzu können beispielsweise Polyphosphate , Polyacrylat-Salze sowie ionische oder nichtionische Tenside eingesetzt werden. Zur Herstellung der bevorzugten, wasserfesten Korrosionsschutz-Anstrichstoffe werden in das Copolymerisat des Bindemittels Carboxylgruppen eingebaut, indem man carboxylgruppenhaltige Comonomere wie Maleinsäure oder deren Anhydrid, Itaconsäure oder deren Anhydrid, Methacrylsäure, Crotonsäure und vor allem Acrylsäure einpolymerisiert. Diese Bindemittel haben dann gleichzeitig dispergierende Wirkung und werden deshalb für den Korrosionsschutz bevorzugt, insbesondere, wenn sie nach EP-A-91 021 oder EP-A-225 612 hergestellt sind und nach 7 Tagen Wasserlagerung bei 23 °C <10, vorzugsweise <5 Gew.% Wasser aufnehmen.

Der wesentliche und überraschende Vorteil der bevorzugten erfindungsgemäßen Korrosionsschutz-Anstrichstoffe ist vor allem durch die gleichzeitige Erfüllung der gegenläufigen Forderungen nach hoher Wasserfestigkeit und gutem Verlauf gegeben. Dies wirkt sich aus in einem besseren Schutz für die verschiedensten Werkstoffe, wie Eisen, Stahl, Holz und Kunststoffe, gegen witterungsbedingte und andere korrosive Beanspruchungen, insbesondere gegen Salzsprühnebel, und die bessere Beständigkeit gegen gleichzeitige mechanische Beanspruchungen. Derartige Anstrichstoffe eignen sich daher beispielsweise besonders als Korrosionsschutzfarbe, wie Rostschutzgrundierungen, Korrosionsschutzfüllgrundierungen und -deckanstriche, oder auch als Straßenmarkierungsfarben.

Aber auch ohne die Wasserfestigkeit zeichnen sich die erfindungsgemäßen Anstrichstoffe durch entscheidend verbesserte Lagerbeständigkeit aus, beispielsweise gegen hartes Absetzen von Pigmenten und Füllstoffen, sowie gegen bakteriellen Angriff, ferner vor allem durch ihre guten Fließeigenschaften und den Glanz ihres Films. Die Verbesserung kommt besonders bei Seidenglanz- und Glanzfarben zum Tragen.

Die erfindungsgemäß einzusetzenden Verdicker können im Gegensatz zu vielen üblichen im gesamten pH-Bereich von 1 bis 10 eingesetzt werden, da ihr Effekt sehr wenig vom pH-Wert abhängt. Sie können aus

Wasser oder wäßrigen Mischungen von mit Wasser mischbaren Lösungsmitteln wie Alkoholen, Glykolen und aus üblichen Lösungsmitteln, in denen die Verdicker löslich sind, wie Estern, Ketonen, Kohlenwasserstoffen, Weichmachern, flüssigen Harzen oder aus flüssigen nichtionischen Tensiden wie Fettalkoholalkoxylaten, Alkylphenolalkoxylaten, Fettsäurealkoxylaten verarbeitet werden. Wegen der sehr starken Verdikkungseffekte ist es vorteilhaft, mit etwa 5 %igen Verdickerlösungen zu arbeiten.

Der Anteil des Verdickers der Formel I (100 % Festgehalt) an der gesamten Formulierung liegt zwischen 0,02 und 2 Gew.%, vorzugsweise bei 0,05 bis 1,0 Gew.%. Eine Kombination mit anderen Verdickungsmitteln, z.B. Hydroxyethylcellulose, kommt nur in Betracht, wenn es auf die Wasserfestigkeit und Korrosionsbeständigkeit des Anstrichs nicht ankommt. Bei Kombination mit anderen Verdickungsmitteln können 0,02 Gewichtsprozent noch unterschritten werden. Die Verdicker werden vorzugsweise als Lösung in Wasser oder einer Kombination aus Wasser und wenigstens teilweise wassermischbaren organischen Lösemitteln eingesetzt.

Die in den Formulierungen und Beispielen angegebenen Teile und Verhältnisse beziehen sich auf das Gewicht, sofern nichts anderes angegeben ist.

Beispiele

Einsatzstoffe zur Herstellung der Anstrichstoffe

Als Dispergiermittel diente ein Styrol/Acrylsäure-Copolymer, das als 35 %ige wäßrig-ammoniakalische Lösung im Handel erhältlich ist.

Bei den Verdickern der Beispiele 1 bis 3 handelt es sich um Polyetherpolyole mit einem Molekulargewicht von ca. 17 000, die durch Umsetzung von Trimethylolpropan (TMP) mit Ethylenoxid/Propylenoxid-Gemisch im Molverhältnis 85/15 und anschließende weitere Umsetzung mit 3 Äquivalenten (bezogen auf TMP) eines Gemisches längerkettiger 1,2-Alkylenoxide erhalten wurden.

Kettenlänge der längerkettigen 1,2-Alkylenoxide:

| | |
|---|---|
| Beispiele 1 und 3: | 15 bis 18 Kohlenstoffatome |
| Beispiel 2 | 24 bis 28 Kohlenstoffatome |

Verdickerkonzentration:

| | |
|---|---|
| Verdickerlösung A: | 4,2 %ig in Wasser |
| Verdickerlösung B: | 12,5 %ig in Propylenglykol/Wasser 20/1 |
| Verdickerlösung C: | 20 %ig in Wasser. |

Beim Vergleichsversuch wurde ein für Dispersionslacke empfohlener handelsüblicher Polyurethanverdicker eingesetzt, der als 50 %ige Lösung in Wasser/Isobutoxipropanol 1:1 vorlag. Diese Lösung wurde mit Wasser auf 25 Gew.% Festgehalt verdünnt (Verdickerlösung D).

Bei den Bindemitteln handelte es sich durchweg um niederviskose, handelsübliche, feinteilige Seifendispersionen:

| Dispersion | Polymertyp | mittlere Teilchengröße (µm) | Feststoffgehalt (Gew.%) |
|---|---|---|---|
| a | Methylmethacrylat/2-Ethylhexylacrylat-Copolymer | ca. 0,2 | 50 |
| b | Butylmethacrylat/Butylacrylat/Styrolacrylat-Copolymer | ca. 0,05 | 42 |
| c | Polybutylmethacrylat | ca. 0,04 | 42 |

Rezepturen (Angaben in Gew.-Teilen)

| Beispiel | 1 | 2 | 3 | Vergleichsversuch |
|---|---|---|---|---|
| Dispergiermittel | 26 | 26 | 26 | 26 |
| Konservierungsmittel | 1 | 1 | 1 | 1 |
| Sulfobernsteinsäure-Na-Salz | - | 1,5 | 1 | - |
| Propylenglykol | 20 | 15 | 20 | 20 |
| Verdickerlösung A | 35,7 | - | - | - |
| " B | - | 6 | - | - |
| " C | - | - | 7,5 | - |
| " D | - | - | - | 9 |
| Entschäumer | 1 | 1 | 1 | 1 |
| Titandioxid (Rutil) | 117 | 117 | 117 | 117 |
| Butyldiglykol | - | - | 2,5 | - |
| Butylglykol | 13 | 13 | - | 13 |
| Propylenglykolpropylether | 5 | 5 | - | 5 |
| Entschäumer | 2 | 0,5 | 1 | 2 |
| Polymerdispersion a | - | 270 | - | 270 |
| " b | 323 | - | - | - |
| " c | - | - | 323 | - |
| Wasser | - | 44 | - | 36 |
| Verdickermenge fest | 1,5 | 0,75 | 1,5 | 2,25 |

Die Herstellung der Dispersionslackfarben erfolgte derart, daß nach Vorlage des Dispergiermittels die weiteren Bestandteile in der oben angegebenen Reihenfolge unter Rühren zudosiert wurden. Das Pigment wurde 20 min bei 1000 Upm in den vor Rutil genannten Bestandteilen dispergiert, die restlichen Bestandteile anschließend bei reduzierter Drehzahl eingerührt. Nach zweistündigem Stehen wurde abgesiebt.

Prüfungen

Aus den Fließkurven der Dispersionslacke, aufgenommen mit einem Rotationsviskosimeter, Standardmeßsystem DIN 53018, wurden Viskositäten für zwei Geschwindigkeitsgefälle errechnet.

Zur Beurteilung von Streichzähigkeit und Verlauf wurden die Lacke auf Glanzkarton gestrichen (0 = guter Verlauf, 5 = kein Verlauf). Auch der Unterschied im Glanzgrad zwischen gestörtem und ungestörtem Film ist ein Maß für den Verlauf.

Der Glanz wurde gemäß DIN 67 530 bestimmt.

| Beispiel | | 1 | 2 | 3 | Vergleichsversuch |
|---|---|---|---|---|---|
| Viskosität/mPa.s | | | | | |
| bei 82 $s^{-}$ | | 2230 | 1490 | 830 | 480 |
| bei 653 $s^{-}$ | | >520 | 300 | 430 | 360 |
| Verarbeitung | | | | | |
| Verstreichen | | etwas zäh | etwas leicht | in Ordnung | etwas zäh |
| Verlauf | | 1 | 1-2 | 0-1 | 1 |
| Film auf Glas 260 µm naß, mit 200 µm Spiralrakel gestört | | | | | |
| Glanz (% Reflexion bei 60 bzw. 20° Glanzwinkel) | 60° | 83 | 82 | 74 | 72 |
| | 60°, gestört | 81 | 79 | 74 | 68 |
| | 20° | 62 | 58 | 44 | 37 |
| | 20°, gestört | 60 | 54 | 43 | 31 |

Wie die obigen Ergebnisse zeigen, ist die Viskosität der erfindungsgemäßen Anstrichstoffe (in diesem Fall Dispersionslacke) trotz geringerem Verdicker-Festgehalt erheblich höher als bei dem Vergleichsversuch. Überraschenderweise zeigen sie trotzdem ein gutes, lackartiges Fließverhalten: sie lassen sich besser verstreichen als der Vergleichsversuch, und der Verlauf ist ebensogut. Auch der überlegene Glanz ist überraschend und weist auf eine gute Verträglichkeit hin.

Beispiel 4

Als Verdickungsmittel wurde ein Polyetherpolyol vom Molgewicht 17 000 verwendet, das durch Umsetzung von Trimethylolpropan mit EO/PO-Gemisch im Molverhältnis 85/15 und anschließende Umsetzung mit 1,2-Epoxihexadecan (3 Mol pro Mol Trimethylolpropan) erhalten worden war.

213 Teile einer 47 %igen wäßrig-ammoniakalischen Dispersion, hergestellt durch Polymerisation von 720 Teilen Methylmethacrylat, 450 Teilen Butylacrylat und 30 Teilen Acrylsäure entsprechend dem Beispiel 2 der EP-A-225 612, wurden mit 35 Teilen entsalztem Wasser, 2 Teilen eines Entschäumers, 1,5 Teilen konz. Ammoniak, 1,5 Teilen eines wasserlöslichen Netzmittels auf der Basis eines Phosphorsäuremonoalkylesters mit einer Säurezahl von 270 mg KOH/g sowie 1,2 Teilen einer 25 %igen Lösung des Verdickungsmittels in Wasser/Butyldiglykol 80/20 vermischt.

In die Mischung wurden 60 Teile Rutil und 220 Teile Kristobalith sowie 10 Teile Solventnaphtha (Siedebereich 140 bis 180° C) eingerührt und am Dissolver dispergiert. Die erhaltene Farbe wurde mit 10 Teilen Wasser auf eine Viskosität von 2 Pa•s eingestellt. Sie zeichnete sich durch gute Viskositätskonstanz und geringes Absitzen der Pigmente und Füllstoffe bei langzeitiger Lagerung bei Raumtemperatur aus und war trotz der relativ hohen Viskosität noch gut durch Luftdruckspritzen verarbeitbar.

Eine mit einer Naßschichtdicke von 0,04 mm auf Asphalt aufgetragene Beschichtung war nach dem Durchtrocknen wasser-, abrieb- und witterungsbeständig.

Vergleichsversuch zu Beispiel 4

Analoge Farben wurden ohne Verdicker bzw. mit der gleichen und mit der doppelten Menge eines marktgängigen Verdickungsmittels, wie einem Urethanverdicker, hergestellt. Der Vergleichs-Anstrichstoff war sehr niedrig viskos und instabil. Das Pigment setzte sich in kurzer Zeit ab. Es war etwa die 4- bis 5-fache Menge Verdickungsmittel erforderlich, um auf ähnliche Viskositätswerte und vergleichbares Schwebevermögen für das Pigment zu kommen. Dieser Vergleichs-Anstrichstoff ergab dann jedoch keine ausreichend wasserquellfesten und naßabriebbeständigen Anstriche mehr, um für die Anwendung als Straßenmarkiermengen brauchbar zu sein.

| | Beispiel 4 | Vergleichsversuch |
|---|---|---|
| Erforderliche Verdickermenge zur Einstellung von 2,0 Pa•s | 0,30 | 1,35 |
| % Verdicker (fest) auf Polymerisat (fest) | | |
| Wasseraufnahme des Anstrichs (24 h Wasserlagerung bei 23° C) | | |
| Trocknung: | | |
| a) 1 Woche Raumtemperatur<br>b) 24 h 50° C | 5 %<br>1,7 % | 23 %<br>10 % |

Beispel 5

Als Verdickungsmittel wurde ein Polyetherpolyol eingesetzt, das durch Umsetzung eines Polyethylenglykols vom Molgewicht 15 000 mit 1,2-Epoxioctadecan im Molverhältnis 1:8 erhalten wurde.

55 Teile einer 45 %igen wäßrig-ammoniakalischen Dispersion, erhalten durch Polymerisation von 456 Teilen Styrol, 612 Teilen Butylacrylat und 72 Teilen Acrylsäure nach dem in der EP-A-225 612, Beispiel 1 beschriebenen Verfahren, wurden mit 25 Teilen entsalztem Wasser, 2 Teilen konz. Ammoniak, 2 Teilen

Entschäumer, 5 Teilen Butyldiglykol, 0,5 Teilen eines wasserlöslichen Netzmittels auf der Basis eines Phosphorsäuremonoalkylesters mit einer Säurezahl von 270 mg KOH/g sowie 1 Teil einer 25 %igen Lösung des Verdickungsmittels in Wasser/Butyldiglykol 80/20 vermischt.

In die Mischung wurden 50 Teile Eisenoxidrot und 30 Teile Schwerspat eingerührt und am Dissolver dispergiert. Die erhaltene Pigmentsuspension wurde mit weiteren 110 Teilen der obigen 45 %igen Polymerdispersion sowie weiteren 2 Teilen Entschäumer vermischt. Die Farbe wurde mit Wasser auf eine Viskosität von 1,5 Pa•s eingestellt.

Ein entfettetes Tiefziehblech wurde mit dieser Farbe mit einer Trockenschichtdicke von 0,08 mm beschichtet. Der Anstrich zeichnete sich durch guten Verlauf aus. Nach dem Durchtrocknen wurde er mit einem Schnitt bis auf den Metalluntergrund versehen und das beschichtete Blech einer Salzsprühbeanspruchung von 200 Stunden ausgesetzt. Am Schnitt entstand Rost, die Beschichtung bleib weitgehend unversehrt.

Vergleichsversuche zu Beispiel 5

Analoge Farben wurden ohne Zusatz eines Verdickungsmittels wie auch mit der gleichen und mit der doppelten Menge eines marktgängigen Urethanverdickers hergestellt. Die Vergleichsfarben waren sehr niedrig viskos und setzten relativ schnell und stark ihre Pigmente bei Lagerung bei Raumtemperatur ab, während die Farbe des Beispiels 5 lagerstabil blieb. Um eine Viskosität von 1,5 Pa•s wie in Beispiel 5 einzustellen, war etwa die 3-fache Menge Verdickungsmittel erforderlich. Die Vergleichsbeschichtungen zeigten am Schnitt verhältnismäßig starke Korrosionserscheinungen, wie Unterrostung, Blasenbildung und Unterwanderung des Anstrichs unter Verlust der Haftfestigkeit.

## Ansprüche

1. Verfahren zum Herstellen von Anstrichen, wobei ein wäßriges Anstrichmittel auf Basis einer Polymerdispersion, die neben der Dispersion als Bindemittel übliche Zusatzstoffe enthält, auf ein Substrat nach Art eines Anstrichs aufgebracht wird, dadurch gekennzeichnet, daß Anstrichmittel eingesetzt werden, die mit einer Verbindung der allgemeinen Formel I verdickt sind:

$$R\left[\left(A\right)_x-\left(CH_2-\underset{\displaystyle |}{\overset{R^1}{C}}H-O\right)_y-H\right]_n \qquad \text{I},$$

wobei
R = über Sauerstoff gebundener Rest eines 2 bis 6-wertigen Alkohols mit 2 bis 10 C-Atomen,
$R^1$ = Alkyl-, Alkoxymethyl- oder Alkenyloxymethyl-Rest oder eine Mischung dieser Reste, mit jeweils 6 bis 30 C-Atomen im Alkyl-, Alkoxy- bzw. Alkenyloxy-Rest,
A = $-CH_2CH_2-O-$ allein oder in Mischung mit

$-CH_2-CH(CH_3)-O-$

$-CH_2-CH(C_2H_5)-O-$

$-CH(CH_3)-CH(CH_3)-O-$ oder

$-CH_2CH_2CH_2CH_2-O-$,

wobei A zu mindestens 50 Mol% $-CH_2CH_2O-$ bedeutet,
x = eine Zahl von 12 bis 500,
y = ein Durchschnittswert von 0,3 bis 5,
n = eine ganze Zahl von 2 bis 6.

2. Verfahren nach Anspruch 1, dadurch gekennzeichnet, daß die Anstrichmittel, bezogen auf die Gesamtmasse, 0,01 bis 5 Gew.% mindestens einer Verbindung der Formel I enthalten.

3. Verfahren nach Anspruch 1, dadurch gekennzeichnet, daß die Pigmentvolumenkonzentration in den Anstrichmitteln 15 bis 45 % beträgt.